# EUROPEAN PATENT APPLICATION

(11) **EP 4 632 568 A1**
(43) Date of publication of application: **15.10.2025**
(21) Application number: 23905343.2
(22) Date of filing: 15.09.2023
(51) Int. Cl.: G06F 9/48

(54) **RESOURCE SCHEDULING METHOD, SYSTEM, AND DEVICE**

(30) Priority: 23.12.2022 CN 202211661132
(71) Applicant: xFusion Digital Technologies Co., Ltd., Zhengzhou, Henan 450000 (CN)
(72) Inventor: HU, Ling, Zhengzhou, Henan 450000 (CN)
(74) Representative: MERH-IP Matias Erny Reichl Hoffmann Patentanwälte PartG mbB
(86) International application number: PCT/CN2023/119262
(87) International publication number: WO 2024/131167

(57) **Abstract**

The present application provides a resource scheduling method, system, and device. The method includes: acquiring at least one service processing request from a first cluster, where the service processing request includes a demanded resource amount required for running a service in the service processing request; based on the at least one service processing request, generating a resource scheduling task, where the resource scheduling task includes a sum of the demanded resource amounts of each service processing request; acquiring a total resource amount of an idle computing node, when the total resource amount of the idle computing node is less than the total demanded resource amount, allocating the idle computing node corresponding to the total resource amount to the first cluster, and determining a demanded resource amount to be allocated; based on the demanded resource amount to be allocated, allocating a newly added idle computing node to the first cluster at least once, where a resource amount allocated to the first cluster is greater than or equal to the total demanded resource amount. By using the above method, resources can be allocated to the first cluster in batches, resulting in higher cluster resource utilization and faster service processing speed.

## Description

This application claims priority to Chinese Patent Application No. 202211661132.X, filed with the China National Intellectual Property Administration on December 23, 2022 and entitled "RESOURCE SCHEDULING METHOD, SYSTEM, AND DEVICE", which is incorporated herein by reference in its entirety.

### TECHNICAL FIELD

The present application relates to the field of computer technology, and in particular to a resource scheduling method, system and device.

### BACKGROUND

With the development of Internet technology, High Performance Computing (HPC, clusters are widely applied. Big data, Artificial Intelligence (AI, and the like can run on the HPC clusters. A unified scheduler in the HPC clusters can schedule cluster resources (computing nodes within the cluster) according to service processing requests, enabling corresponding services to run on the computing nodes within the cluster. For example, the service processing request can be an AI service processing request, a big data service processing request, etc. However, in related technologies, the cluster resources exhibit a low resource utilization and a slow service processing speed.

### SUMMARY

The present application provides a resource scheduling method, system and device, which improve a cluster resource utilization and enhance a service processing speed.

In a first aspect, the present application provides a resource scheduling method, including: acquiring at least one service processing request from a first cluster, where the service processing request includes a demanded resource amount required for running a service in the service processing request; based on the at least one service processing request, generating a resource scheduling task, where the resource scheduling task includes a total demanded resource amount, and the total demanded resource amount is a sum of the demanded resource amounts of each service processing request; acquiring a total resource amount of an idle computing node, when the total resource amount of the idle computing node is less than the total demanded resource amount, allocating the idle computing node corresponding to the total resource amount to the first cluster, and determining a demanded resource amount to be allocated, where the demanded resource amount to be allocated is a result obtained by subtracting the total resource amount from the total demanded resource amount; and allocating a newly added idle computing node to the first cluster at least once based on the demanded resource amount to be allocated, where a resource amount allocated to the first cluster is greater than or equal to the total demanded resource amount.

The above technical solution can generate the resource scheduling task based on the at least one service processing request, and allocate the idle computing node to the first cluster according to the resource scheduling task, and allocate the newly added idle computing node to the first cluster at least once. By using the above method, resources can be allocated to the service processing request as soon as possible, resulting in a higher cluster resource utilization and a faster service processing speed.

In a possible implementation, allocating the newly added idle computing node to the first cluster at least once based on the demanded resource amount to be allocated, includes: generating a shadow task based on the demanded resource amount to be allocated, where the shadow task includes the demanded resource amount to be allocated; and allocating the newly added idle computing node to the first cluster at least once based on the shadow task.

In the above technical solution, the shadow task can be generated based on a resource amount to be allocated, and the newly added idle computing node can continue to be allocated to the first cluster at least once based on the shadow task. By using the above method, a purpose of allocating resources to the first cluster in batches is achieved, improving an overall resource utilization in the cluster.

In a possible implementation, allocating the newly added idle computing node to the first cluster at least once based on the shadow task, includes: determining an i^{th} resource amount to be allocated based on the total demanded resource amount and a total resource amount that has been allocated to the first cluster; generating an i^{th} shadow task based on the i^{th} resource amount to be allocated; and performing an (i+1)^{th} resource allocation for the first cluster based on the i^{th} shadow task; where the i sequentially takes 1, 2, ..., until the resource amount allocated to the first cluster is greater than or equal to the total demanded resource amount.

In the above technical solution, the shadow task can be generated based on the total demanded resource amount and the resources that have been allocated to the first cluster, and resources can continue to be allocated to the first cluster based on the shadow task. By using the above method, the idle computing node in the cluster can be allocated to the first cluster in time, resulting in a higher resource utilization in the cluster.

In a possible implementation, based on the at least one service processing request, generating a resource scheduling task includes: performing parsing processing on the at least one service processing request to obtain a demanded resource amount of various types of resources of each service processing request; determining a total demanded resource amount of various types of resources based on the demanded resource amount of various types of resources of each service processing request; and generating the resource scheduling task based on the total demanded resource amount of various types of resources.

In the above technical solution, the resource scheduling task can be generated based on the at least one service processing request, facilitating a resource scheduling platform to allocate resources to the first cluster based on the resource scheduling task.

In a possible implementation, after allocating the idle computing node to the first cluster, the method further includes:determining a second computing node allocated to the first cluster; and switching a state of the second computing node from an idle state to an occupied state.

In the above technical solution, after a computing node in the cluster is in use, the state of the computing node can be switched from the idle state to the occupied state, thereby preventing the resource scheduling platform from repeatedly allocating the same computing node to a plurality of first clusters.

In a possible implementation, the method further includes: acquiring resource usage information of each computing node in the first cluster; and in a case of, based on the resource usage information, determining that no service is running on a third computing node in the first cluster, reclaiming the third computing node from the first cluster, and switching a state of the third computing node to an idle state.

In the above technical solution, the idle computing node in the first cluster can be reclaimed as soon as possible, facilitating reallocation of a service processing task to the computing node, thereby achieving a higher resource utilization.

In a second aspect, the present application further provides a computing device, including a memory and a processor connected to the memory, where the processor is configured to generate a resource scheduling task based on at least one service processing request of a first cluster, the resource scheduling task includes a total demanded resource amount required for running a service of the at least one service processing request, and the total demanded resource amount is a sum of demanded resource amounts of each service processing request; the processor is further configured to acquire a total resource amount of an idle computing node, when the total resource amount of the idle computing node is less than the total demanded resource amount, allocate the idle computing node corresponding to the total resource to the first cluster, and determine a demanded resource amount to be allocated, where the demanded resource amount to be allocated is a result obtained by subtracting the total resource amount from the total demanded resource amount; and the processor is further configured to allocate a newly added idle computing node to the first cluster at least once based on the demanded resource amount to be allocated, where a resource amount allocated to the first cluster is greater than or equal to the total demanded resource amount.

In the above technical solution, the resource scheduling task can be generated based on the at least one service processing request, the idle computing node can be allocated to the first cluster according to the resource scheduling task, and the shadow task can be generated; and the newly added idle computing node can be allocated to the first cluster at least once based on the shadow task. By using the above method, resources can be allocated to the first cluster in batches, resulting in a higher overall cluster resource utilization and a faster service processing speed.

In a possible implementation, the processor is further configured to, when the total resource amount is less than the total demanded resource amount, generate a shadow task, and allocate the newly added idle computing node to the first cluster at least once based on the shadow task; and the processor is further configured to acquire resource usage information of each computing node in the first cluster; and in a case of, based on the resource usage information, determining that no service is running on a third computing node in the first cluster, reclaim the third computing node from the first cluster, and switch a state of the third computing node to an idle state.

In the above technical solution, the resources can be allocated to the first cluster based on the shadow task, achieving the purpose of allocating the resources to the first cluster in batches and enhancing the overall resource utilization in the cluster. In addition, the idle resources in the first cluster can also be reclaimed, facilitating reallocation of a service processing task to the computing node, thereby achieving the higher resource utilization.

In a third aspect, the present application provides a resource scheduling system, including the computing device as described in the second aspect and at least one first cluster, where the computing device is configured to perform any one of the methods mentioned in the first aspect, to allocate the idle computing node to the first cluster, and to allocate the newly added idle computing node to the first cluster at least once; and the first cluster is configured to schedule and allocate an acquired idle computing node to execute the at least one service processing request.

In the above technical solution, the resource scheduling task can be generated based on the at least one service processing request, the idle computing node can be allocated to the first cluster according to the resource scheduling task, and the shadow task can be generated; and the newly added idle computing node can be allocated to the first cluster at least once based on the shadow task. By using the above method, the resources can be allocated to the first cluster in batches, resulting in the higher overall cluster resource utilization and the faster service processing speed.

In a fourth aspect, the present application provides a resource scheduling device, including: a processor, and a memory communicatively connected to the processor; where the memory stores a computer program; and the processor executes the computer program to implement any one of the methods mentioned in the first aspect.

In the above technical solution, the resource scheduling task can be generated based on the at least one service processing request, the idle computing node can be allocated to the first cluster according to the resource scheduling task, and the shadow task can be generated; and the newly added idle computing node can be allocated to the first cluster at least once based on the shadow task. By using the above method, the resources can be allocated to the first cluster in batches, resulting in the higher overall cluster resource utilization and the faster service processing speed.

In a fifth aspect, the present application provides a computer-readable storage medium, where the computer-readable storage medium stores a computer program, and the computer program is executed by a computer to implement any one of the methods mentioned in the first aspect.

In the above technical solution, the resource scheduling task can be generated based on the at least one service processing request, the idle computing node can be allocated to the first cluster according to the resource scheduling task, and the shadow task can be generated; and the newly added idle computing node can be allocated to the first cluster at least once based on the shadow task. By using the above method, the resources can be allocated to the first cluster in batches, resulting in the higher overall cluster resource utilization and the faster service processing speed.

In a sixth aspect, the present application provides a computer program product, including a computer program, where the computer program is executed by a computer to implement any one of the methods mentioned in the first aspect.

In the above technical solution, the resource scheduling task can be generated based on the at least one service processing request, the idle computing node can be allocated to the first cluster according to the resource scheduling task, and the shadow task can be generated; and the newly added idle computing node can be allocated to the first cluster at least once based on the shadow task. By using the above method, the resources can be allocated to the first cluster in batches, resulting in the higher overall cluster resource utilization and the faster service processing speed.

### BRIEF DESCRIPTION OF DRAWINGS

In order to more clearly illustrate technical solutions in embodiments of the present application or in the related art, the accompany drawings to be used in the embodiments of the present application or in the related art will be described briefly. Apparently, the drawings in the following description are only some of the embodiments of the present application, and other drawings may be obtained based on these drawings without creative effort for those skilled in the art.
FIG. 1 is a schematic diagram of an architecture for a unified scheduling platform;
FIG. 2 is a schematic diagram of an architecture for co-location scheduling;
FIG. 3 is a schematic diagram of a system architecture for a resource scheduling system according to an embodiment of the present application;
FIG. 4 is a flowchart of a resource scheduling method according to an embodiment of the present application;
FIG. 5 is a flowchart of another resource scheduling method according to an embodiment of the present application;
FIG. 6 is a flowchart of resource allocation for a first cluster according to an embodiment of the present application;
FIG. 7 is a structural diagram of a resource scheduling platform according to an embodiment of the present application;
FIG. 8 is a structural diagram of another resource scheduling platform according to an embodiment of the present application;
FIG. 9 is a schematic diagram of a computing node reclamation according to an embodiment of the present application;
FIG. 10 is a resource scheduling system according to an embodiment of the present application; and
FIG. 11 is a schematic diagram of a hardware structure of a resource scheduling device according to an embodiment of the present application.

### DESCRIPTION OF EMBODIMENTS

Reference will now be made in detail to exemplary embodiments, which are illustrated in the accompanying drawings. The following description refers to the accompanying drawings in which same numbers in different drawings represent same or similar elements unless otherwise stated. The implementations set forth in the following exemplary embodiments do not represent all implementations consistent with the embodiments of the present application. Instead, they are merely examples of apparatuses and methods consistent with some aspects of the embodiments of the present application as recited in the appended claims.

It should be noted that, in the document, the terms "comprising", "including" or any other variations thereof are intended to cover non-exclusive inclusions, such that a process, method, article, or apparatus that includes a series of elements not only includes those elements, but also includes other elements that are not expressly listed, or further includes elements inherent to the process, method, article, or apparatus. In the absence of additional limitations, elements limited by the sentence "comprising a..." does not exclude the presence of additional identical elements in the process, method, article, or apparatus that includes the elements.

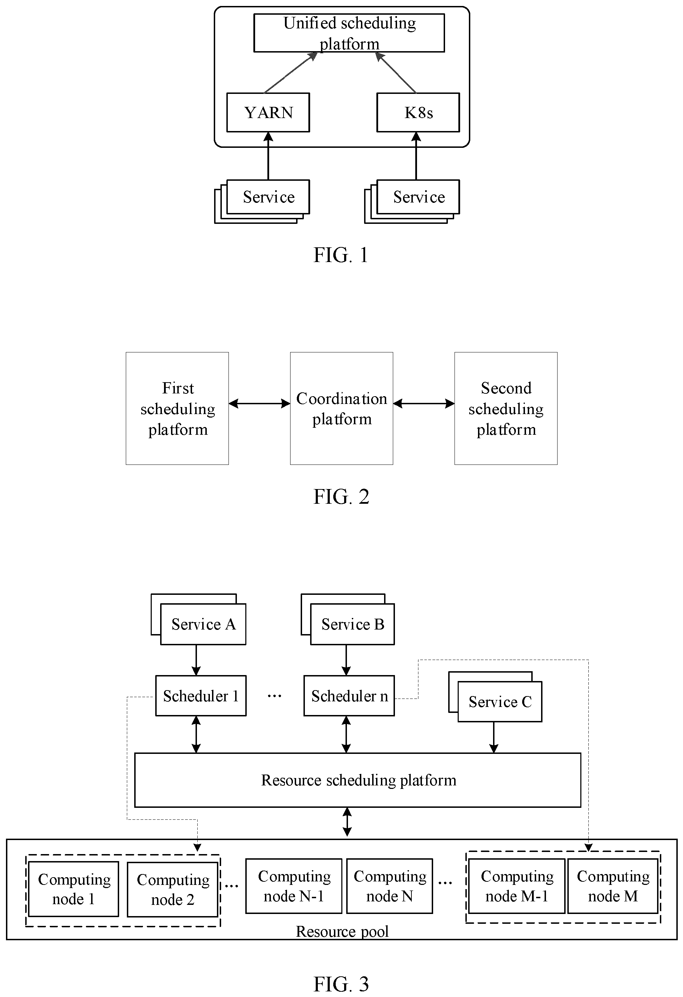

For ease of understanding, as shown in FIGS. 1 to 2, two resource scheduling methods are illustratively shown.

FIG. 1 is a schematic diagram of an architecture for a unified scheduling platform. As shown in FIG. 1, the unified scheduling platform may simultaneously connect to Yet Another Resource Negotiator (Yet Another Resource Negotiator, YARN) and Kubernetes (K8s). For example, the unified scheduling platform may be YuniKorn.

Both YARN and K8s may serve as third-party cluster resource managers.YARN may receive one type of service submitted by a user and may send the one type of service to the unified scheduling platform. For example, the one type of service may be a big data service. K8s may receive another type of service submitted by the user and may send the another type of service to the unified scheduling platform. For example, the another type of service may be an AI service. It should be understood that a quantity of services YARN sends to the unified scheduling platform, as well as a quantity of services K8s sends to the unified scheduling platform, can be one or more.

After receiving the services from YARN and K8s, the unified scheduling platform can schedule cluster resources for the received services. A method in which the unified scheduling platform schedules the cluster resources is as follows: when available idle resources in a current cluster are less than a resource amount requested by a service processing request, the unified scheduling platform may wait until the available idle resources in the cluster are greater than or equal to the resource amount requested by the service processing request, and then schedule the cluster resources for the service processing request. However, this results in that part of idle resources in the cluster are not utilized and the service processing request is not handled timely, leading to a lower resource utilization and a slower service processing speed in the cluster.

In addition, in the above method, YARN and K8s do not participate in resource scheduling, and the resource scheduling is exclusively performed by the unified scheduling platform. The unified scheduling platform needs to be designed to be compatible with different cluster resource managers to schedule resources for services sent by the different cluster resource managers. This results in higher service complexity and a larger service overhead for the unified scheduling platform.

FIG. 2 is a schematic diagram of an architecture for co-location scheduling. As shown in FIG. 2, a first scheduling platform and a second scheduling platform may connect (communicate) with a coordination platform. For example, the first scheduling platform may be a Sigma scheduler, the second scheduling platform may be a Fuxi scheduler, and the coordination platform may be Level-0.

The coordination platform may schedule the cluster resources. The coordination platform may function as a coordination controller to negotiate a resource allocation issue between the first scheduling platform and the second scheduling platform. A method in which the first scheduling platform or the second scheduling platform schedules the cluster resources is as follows: when the available idle resources in the current cluster are less than the resource amount requested by the service processing request, the first scheduling platform or the second scheduling platform may wait until the available idle resources in the cluster are greater than or equal to the resource amount requested by the service processing request, and then schedule the cluster resources for the service processing request. However, this results in that part of the idle resources in the cluster are not utilized, and the service processing request is not handled timely, leading to the lower resource utilization and the slower service processing speed in the cluster.

In addition, in the above method, when the first scheduling platform and the second scheduling platform perform the resource scheduling, the coordination platform needs to conduct negotiations. When service throughput of the cluster is high, the coordination platform needs to frequently negotiate the resource allocation issue between the first scheduling platform and the second scheduling platform, resulting in low efficiency in resource scheduling and the slower service processing speed.

In view of this, the embodiment of the present application provides a resource scheduling method, to improve the resource utilization and enhance the service processing speed.

The following, in combination with FIG. 3, describes a system architecture for a resource scheduling system involved in the embodiment of the present application.

FIG. 3 is a schematic diagram of a system architecture for a resource scheduling system according to an embodiment of the present application. As shown in FIG. 3, the resource scheduling system includes: a resource pool, a resource scheduling platform, and a plurality of schedulers (such as a scheduler 1, ..., and a scheduler n in FIG. 3). The resource scheduling platform may communicate with the resource pool and the plurality of schedulers, and the plurality of schedulers may communicate with the resource pool.

The resource scheduling platform may serve as a resource management and scheduling system in the cluster. The resource scheduling platform may be a software program or a device. When the resource scheduling platform is the software program, the resource scheduling platform may be stored in a memory of a computing device and run by a processor of the computing device. The computing device may be a server, computer, mobile phone, or other computing device with a processing capability. When the resource scheduling platform is the device, the resource scheduling platform may be a server, computer, mobile phone, or other computing device with a processing capability. The resource scheduling platform may schedule and allocate an idle node in the resource pool based on resource information required by a service processing request submitted by the user.

The resource pool may be a collection of all computing nodes in the cluster (such as a computing node 1, ..., and a computing node N in FIG. 3). For example, the computing nodes may be servers, desktop computers, tablets, or artificial intelligence devices, etc. The computing nodes may further be computing units, and the computing units may be components that are capable of realizing computing capabilities, and consist of components such as mainboards and CPUs. The computing nodes in the cluster may be connected to the resource scheduling platform via an interface, allowing the resource scheduling platform to update states of the computing nodes in real time. The states of the computing nodes may be an idle state, a partially occupied state, or a fully occupied state. It should be noted that a quantity M of computing nodes in the resource scheduling system may be different from a quantity n of schedulers, or, the quantity M of the computing nodes in the resource scheduling system may be same as the quantity n of the schedulers, which are not limited in the embodiment of the present application.

The scheduler may be a software program or a device. When the scheduler is the software program, the scheduler may be stored in the memory of the computing device and run by the processor of the computing device. The computing device may be a server, computer, mobile phone, or other computing device with a processing capability. When the scheduler is the device, the scheduler may be a server, computer, mobile phone, or other computing device with a processing capability.

In some embodiments, when the resource scheduling platform is the software program, the resource scheduling platform may be stored in the computing device or in a computing node of the resource pool.

In some embodiments, when the scheduler may be the software program, the scheduler may be stored in the computing device, or in the computing node of the resource pool. The plurality of schedulers may be stored in a same computing device or computing node, and one or more schedulers may be stored together with the resource scheduling platform in the same computing device or node.

In the above resource scheduling system, the user can submit the service processing request to the scheduler, and the service processing request may include a demanded resource amount required for running the service. For example, the user can send the service processing request to the scheduler through a client. The resource scheduling platform can periodically acquire the service processing request from the scheduler, determine a total demanded resource amount corresponding to the service processing request, and allocate an idle computing node in the resource pool to a corresponding scheduler, thereby enabling the scheduler to run at least one sub-service of a service corresponding to the service processing request on the idle computing node. It should be understood that the scheduler may connect to each computing node in the resource pool in a wired or wireless manner.

It should be noted that the resource scheduling platform acquires the service processing request from the scheduler mainly in the following two scenarios:
Scenario 1: The resource scheduling platform can proactively read a service processing request from each scheduler.

In this scenario, there is no need for configuring the current scheduler with a function of sending the service processing request, so that improvement cost of the scheduler is relatively low.

Scenario 2: Each scheduler can proactively send the service processing request to the resource scheduling platform.

In this scenario, a function for timed sending the service processing request can be configured on each scheduler, making the complexity for the resource scheduling platform lower.

It should be noted that, for any one scheduler, computing nodes allocated by the resource scheduling platform to the scheduler and the scheduler can form a sub-cluster. Take FIG. 3 as an example. The scheduler 1, the computing node 1, and a computing node 2 can form a sub-cluster; the scheduler n, a computing node M-1, and the computing node M can also form a sub-cluster.

Optionally, the user can also directly submit the service processing request to the resource scheduling platform, and the service processing request may include the demanded resource amount required for running the service. After receiving the service processing request submitted by the user, the resource scheduling platform can run the service processing request on the idle computing node or a partially occupied computing node in the resource pool.

It should be noted that types of service processing requests received by each resource scheduler and the resource scheduling platform may vary. Take FIG. 3 as an example. The scheduler 1 can receive a service A, the scheduler 2 can receive a service B, and the resource scheduling platform can receive a service C. The service A, the service B, and the service C may be different types of services.

When allocating the resources, when a resource amount that can be provided by the idle computing node in the current cluster is less than a total demanded resource amount corresponding to at least one service processing request, the resource scheduling platform can first allocate the idle computing node in the current cluster to a corresponding scheduler. The scheduler then allocates at least one sub-service to the idle computing node, so that the idle computing node runs the at least one sub-service. When a newly-added idle computing node is available in the resource pool, the resource scheduling platform continues to allocate the resources to the scheduler until the resource amount allocated to the scheduler is greater than or equal to the total demanded resource amount corresponding to the at least one service processing request.

By means of the above resource scheduling method, the idle computing node in the resource pool can be allocated to the scheduler timely, resulting in a higher resource utilization in the resource pool. In addition, the embodiments of the present application only involve a single resource scheduling platform, which, compared with an architecture with a plurality of resource scheduling platforms, eliminates need for a resource negotiation among the plurality of resource scheduling platforms, thereby enabling a faster service processing speed.

In some embodiments, the resource scheduling platform can receive a service processing request of each scheduler and allocate resources to the plurality of schedulers in a preset order. For example, the preset order may be a chronological order of receiving the service processing request, or a priority order of the scheduler, etc., which is not limited in the embodiments of the present application.

The following provides a detailed explanation of the technical solutions described in the embodiments of the present application through specific examples. It should be noted that the following specific embodiments can exist independently or in combination with each other. For identical or similar content, it is not repeated in different embodiments.

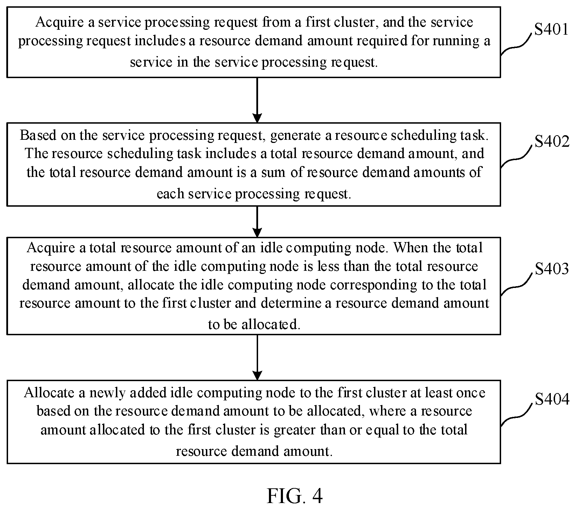

FIG. 4 is a flowchart of a resource scheduling method according to an embodiment of the present application. As shown in FIG. 4, the method includes:
S401: Acquire a service processing request from a first cluster, and the service processing request includes a demanded resource amount required for running a service in the service processing request.

In the embodiment, an executing body may be the resource scheduling platform, or a resource scheduling device in the resource scheduling platform.

In the embodiment, the resource scheduling platform, the scheduler, and the plurality of computing nodes in the resource pool may form a service processing cluster.

The first cluster may be a sub-cluster in the service processing cluster. The first cluster may include one scheduler and a plurality of computing nodes.

In the embodiment, the service processing cluster may include one or more first clusters. Each first cluster may be different types of service clusters, and schedulers included in the different types of service clusters vary. For example, the first cluster may be a K8s cluster, and the K8s cluster may include a K8s scheduler. The first cluster can receive the service processing request submitted by the user. That is, the user can submit the service processing request to the first cluster.

In a specific implementation process, the user can submit the service processing request to the scheduler in the first cluster. The service processing request may be a single service request, or a plurality of service processing requests. The resource scheduling platform can acquire the service processing request submitted by the user from the scheduler of the first cluster.

It should be understood that one first cluster can receive one type of service processing request. For example, in a case that the first cluster is a K8s cluster, the service processing request the first cluster can receive is an AI service processing request.

In the embodiment, one service processing cluster may include a plurality of first clusters. Each first cluster can receive one type of service processing request submitted by the user. The resource scheduling platform can acquire the service processing request from each first cluster.

Resource types may include: memory, a central processing unit (central processing unit, CPU), and a graphics processing unit (graphics processing unit, GPU), etc.

For example, the service processing request may include a demanded memory amount, a demanded CPU amount, and a demanded GPU amount.

It should be noted that the service requires memory and a CPU when running. Therefore, the service processing request may include at least two types of demanded resource amounts.

S402: Based on the service processing request, generate a resource scheduling task. The resource scheduling task includes a total demanded resource amount, and the total demanded resource amount is a sum of demanded resource amounts of each service processing request.

The resource scheduling task may be a task to allocate the idle computing node to the first cluster based on the total demanded resource amount required for the service processing request.

In the embodiment, parsing processing may be performed on at least one service processing request to obtain a demanded resource amount of various types of resources of each service processing request; based on the demanded resource amount of various types of resources of each service processing request, a total demanded resource amount of various types of resources can be determined; and based on the total demanded resource amount of various types of resources, the resource scheduling task can be generated.

In the specific implementation process, at a fixed time interval, the service processing request received by the first cluster may be acquired from the first cluster, and may be parsed to obtain the demanded resource amount of various types of resources corresponding to the service processing request.

It should be understood that a quantity of service processing requests obtained from the first cluster may be one or more.

In a possible implementation, in a case that the quantity of the service processing requests obtained from the first cluster is one, the resource scheduling task can be generated based on the demanded resource amount of various types of resources included in the service processing request. The resource scheduling task may include the demanded resource amount of various types of resources corresponding to the service processing request.

For example, assume that the quantity of the service processing requests obtained from the first cluster is one. The service processing request includes the demanded memory amount and the demanded CPU amount, and the demanded memory amount is 256G and the demanded CPU amount is 500 cores. Consequently, a total demanded resource amount of memory included in the service processing request is 256G, and a total demanded resource amount of CPU is 500 cores. The demanded resource amount included in the resource scheduling task can be: 256G memory and 500 CPU cores.

In another possible implementation, in a case that the quantity of the service processing requests obtained from the first cluster is a plurality, the resource scheduling task can be generated based on the demanded resource amount of various types of resources included in the plurality of service processing requests. The resource scheduling task may include the demanded resource amount of various types of resources corresponding to the plurality of service processing requests.

For example, assume that the quantity of the service processing requests obtained from the first cluster is ten. The ten service processing requests include only the demanded memory amount and the demanded CPU amount, and the demanded memory amount is 128G and the demanded CPU amount is 100 cores. Consequently, a total demanded resource amount of memory included in the ten service processing requests is 1280G, and a total demanded resource amount of CPU is 1000 cores. The demanded resource amount included in the resource scheduling task can be: 1280G memory and 1000 CPU cores.

S403: Acquire a total resource amount of an idle computing node. When the total resource amount of the idle computing node is less than the total demanded resource amount, allocate the idle computing node corresponding to the total resource amount to the first cluster and determine a demanded resource amount to be allocated.

The demanded resource amount to be allocated is a result obtained by subtracting the total resource amount from the total demanded resource amount. It should be understood that the resource amount to be allocated is a resource amount that the resource scheduling platform still needs to allocate to the first cluster after allocating a current idle computing node to the first cluster.

The idle computing node refers to a node in an idle state in the cluster. It should be understood that the resource scheduling platform can acquire a state of each node in the cluster. A quantity of the idle computing nodes may be one or more.

The total resource amount of the idle computing nodes may be a sum of resource amounts of all idle nodes.

Optionally, in a case that the quantity of the idle computing nodes in the resource pool is one, the total resource amount of the idle computing nodes can be a resource amount in the one idle computing node.

Optionally, in a case that the quantity of the idle computing nodes in the resource pool is a plurality, the total resource amount of the idle computing nodes can be a sum of resource amounts in the plurality of idle computing nodes.

In the embodiment, the total resource amount of the current idle computing node in the resource pool may be greater than or equal to the total demanded resource amount included in the resource scheduling task; or, the total resource amount of the current idle computing node in the resource pool may be less than the total demanded resource amount included in the resource scheduling task.

In a possible implementation, in a case that the total resource amount of the current idle computing node in the resource pool is greater than or equal to the total demanded resource amount, the resource scheduling platform can allocate a demanded resource amount to the first cluster through a single resource allocation.

For example, in a case that the total demanded resource amount included in the resource scheduling task is: 128G memory and 372 CPU cores. The computing node 1 is currently idle in the cluster, and a total resource amount of the computing node 1 is: 256G memory and 500 CPU cores. Then, the resource scheduling platform can allocate the computing node 1 to the first cluster, so that the scheduler in the first cluster can allocate a corresponding service to the computing node 1.

In another possible implementation, in a case that the total resource amount of the current idle computing node in the cluster is less than the total demanded resource amount included in the resource scheduling task, the resource scheduling platform can first allocate the idle computing node corresponding to the total resource amount to the first cluster and determine the resource amount to be allocated.

For example, in a case that the total demanded resource amount included in the resource scheduling task is: 1000G memory, 500 CPU cores, and 40 GPU cards, when only the computing node 1 is currently idle in the cluster, and the total resource amount of the computing node 1 is 256G memory, 128 CPU cores, and 5 GPU cards, the resource scheduling platform can allocate the computing node 1 to the first cluster. Consequently, a resource amount still required in the resource scheduling task is: 744G memory, 372 CPU cores, and 35 GPU cards. That is, the resource amount to be allocated is 744G memory, 372 CPU cores, and 35 GPU cards.

It can be understood that the card in 5 GPU cards refers to one GPU card, and generally, one GPU card can be provided with one GPU chip.

S404: Allocate a newly added idle computing node to the first cluster at least once based on the demanded resource amount to be allocated, where a resource amount allocated to the first cluster is greater than or equal to the total demanded resource amount.

In the embodiment, after the resource scheduling platform determines the resource amount to be allocated, in a case that there is the newly idle computing node in the resource pool, the resource scheduling platform can continue to allocate the newly added idle computing node to the first cluster based on the resource amount to be allocated until the resource amount allocated to the first cluster is greater than or equal to the total resource amount.

For example, assume that the resource amount to be allocated is 744G memory, 372 CPU cores, and 35 GPU cards. In a case that there is a newly added idle computing node in the resource pool, the newly added idle computing node is the computing node 2, and a total resource amount of the computing node 2 is: 1024G memory, 500 CPU cores, and 40 GPU cards. The total amount of various types of resources in the computing node 2 is greater than the resource amount to be allocated. Therefore, the resource scheduling platform can allocate the computing node 2 to the first cluster. At this point, the resource scheduling platform completes resource allocation for the first cluster.

In the resource scheduling method provided in the embodiment, the resource scheduling platform can acquire the at least one service processing request from the first cluster, and generate the resource scheduling task based on the at least one service processing request. In a case that the total resource amount of the current idle computing node in the cluster is less than the demanded resource amount included in the resource scheduling task, the resource scheduling platform can allocate the resources to the first cluster in batches. This not only improves an overall resource utilization of the cluster but also accelerates a service processing speed of the first cluster, resulting in a higher cluster resource utilization and a faster service processing speed.

In addition, the resource scheduling platform in the embodiment can allocate the idle computing node to the scheduler, enabling the scheduler to allocate the service in each service processing request to run on the idle computing node. In other words, in the embodiment, an execution body responsible for allocating the resources for each service request is the scheduler. The resource scheduling platform does not need to allocate the service in the service processing request, so that the resource scheduling platform does not need to be compatible with different schedulers, thereby resulting in lower service complexity and a smaller service overhead for the resource scheduling platform.

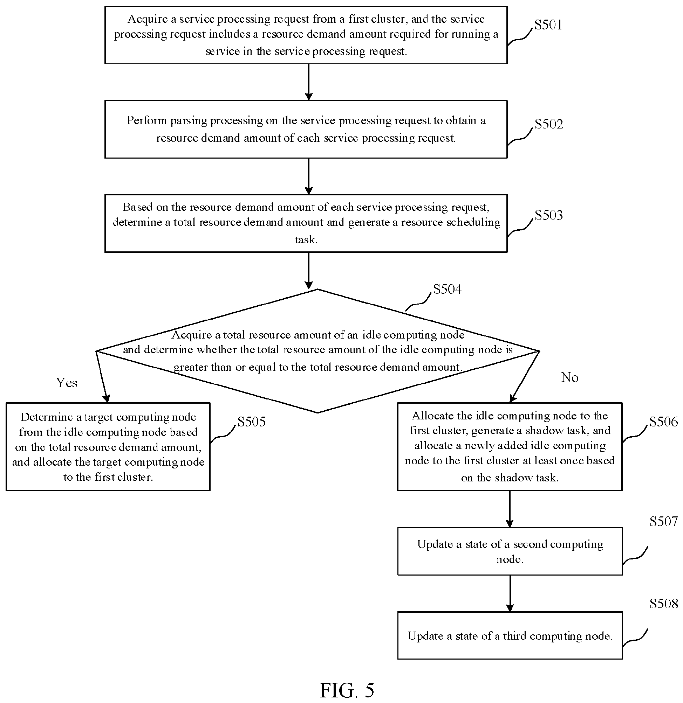

Based on the embodiment in FIG. 4, in a case that the total resource amount of the current idle computing node in the cluster is less than the total demanded resource amount included in the resource scheduling task, the resource scheduling platform may generate a shadow task and allocate the resources to the first cluster in batches based on the shadow task. The following illustrate the above solution in combination with FIG. 5.

FIG. 5 is a flowchart of another resource scheduling method according to an embodiment of the present application. As shown in FIG. 5, the may includes:
S501: Acquire a service processing request from a first cluster, and the service processing request includes a demanded resource amount required for running a service in the service processing request.

It should be noted that the specific implementation of S501 can refer to S401, which will not be repeated here.

S502: Perform parsing processing on the service processing request to obtain a demanded resource amount of each service processing request.

In the embodiment, a process of parsing each service processing request is the same. The following, taking any one service processing request as an example, explains the process of the resource scheduling platform parsing the service processing request.

For example, assume that the resource scheduling platform acquires a service processing request 1 from the first cluster. The service processing request 1 includes a demanded resource amount of 256G memory and a demanded resource amount of 300 CPU cores. Then, after parsing the service processing request 1, the resource scheduling platform can acquire a demanded resource amount of various types of resources corresponding to the service processing request 1, that is, the demanded resource amount of 256G memory and the demanded resource amount of 300 CPU cores.

S503: Based on the demanded resource amount of each service processing request, determine a total demanded resource amount and generate a resource scheduling task.

In the embodiment, each service processing request may include a demanded resource amount of one type of resources; alternatively, each service processing request may include a demanded resource amount of various types of resources. In a specific implementation process, the demanded resource amount of resources of a same type in the plurality of service processing requests can be summed according to the resource type, to determine the demanded resource amount of various types of resources.

For example, assume that 3 service processing requests are acquired from the first cluster. The demanded amount of various types of resources included in the 3 service processing requests can be as shown in Table 1:

**Table 1**

| Service Processing Request | Demanded resource Amount | | |
|---|---|---|---|
| | CPU/cores | Memory/G | GPU/cards |
| Service processing request 1 | 4 | 128 | 2 |
| Service processing request 2 | 32 | 1024 | 8 |
| Service processing request 3 | 16 | 256 | 4 |

By summing the demanded resource amounts of the service processing request 1, the service processing request 2, and the service processing request 3, the total demanded resource amount of various types of resources can be obtained. The total demanded resource amount of various types of resources can be as shown in Table 2:

**Table 2**

| Total Demanded resource Amount | | |
|---|---|---|
| CPU/cores | Memory/G | GPU/cards |
| 52 | 1408 | 14 |

In the embodiment, the resource scheduling platform can generate the resource scheduling task based on the demanded resource amount included in the acquired service processing request. The resource scheduling task includes the total demanded resource amount, and the total demanded resource amount is a sum of demanded resource amounts of each service processing request.

For example, assume that the total demanded resource amount is as shown in Table 2. The total demanded resource amount included in the resource scheduling task can be: 52 CPU cores, 1408G memory, and 14 GPU cards.

S504: Acquire a total resource amount of an idle computing node and determine whether the total resource amount of the idle computing node is greater than or equal to the total demanded resource amount.
If yes, proceed to S505;
If no, proceed to S506.

It should be noted that, in a case that a total resource amount of each type of resources in the idle computing node is greater than or equal to a corresponding resource amount in the total demanded resource amount, the resource scheduling platform can determine that the total resource amount of the idle computing node is greater than or equal to the total demanded resource amount. Conversely, in a case that the total resource amount of any type of the resources in the idle computing node is less than the corresponding resource amount in the total demanded resource amount, the resource scheduling platform can determine that the total resource amount of the idle computing node is less than the total demanded resource amount.

For example, assume that the total demanded resource amount included in the resource scheduling task is: 52 CPU cores, 1408G memory, and 14 GPU cards. In a case that a total CPU amount in the idle computing node is greater than or equal to 52 cores, a total memory amount is greater than or equal to 1408G, and a total GPU amount is greater than or equal to 14 cards, the resource scheduling platform can determine that the total resource amount of the idle computing node is greater than or equal to the total demanded resource amount. In a case that the total CPU amount in the idle computing node is less than 52 cores, or the total memory amount is less than 1408G, or the total GPU amount is less than 14 cards, the resource scheduling platform can determine that the total resource amount of the idle computing node is less than the total demanded resource amount.

S505: Determine a target computing node from the idle computing node based on the total demanded resource amount, and allocate the target computing node to the first cluster.

It should be understood that a quantity of idle computing nodes can be one or more. In a case that there are a plurality of available idle computing nodes, the resource scheduling platform can determine one or more idle computing nodes from the plurality of idle computing nodes based on a preset order, and allocate the determined idle computing node, i.e., the target computing node, to the first cluster.

The preset order may be a registration order of all computing nodes during cluster initialization, or a preconfigured order according to addresses of the computing nodes, which is not limited in the embodiment of the present application.

S506: Allocate the idle computing node to the first cluster, generate a shadow task, and allocate a newly added idle computing node to the first cluster at least once based on the shadow task.

In the embodiment, after the resource scheduling platform allocates the idle computing node to the first cluster, the resource scheduling platform can determine a demanded resource amount to be allocated and generate the shadow task based on the demanded resource amount to be allocated. The shadow task may include the demanded resource amount to be allocated.

The shadow task may be a task of allocating the idle computing node to the first cluster based on the demanded resource amount to be allocated. A quantity of shadow tasks can be one or more.

The shadow task may include a demanded resource amount of various types of resources. The demanded resource amount of various types of resources included in the shadow task can be a difference value obtained by subtracting a corresponding total resource amount of various types of resources that can be provided by the idle computing node that has been allocated to the first cluster from the total resource amount of various types of resources included in the resource scheduling task.

For example, assume that the total demanded resource amount included in the resource scheduling task is: 52 CPU cores, 1424G memory, and 14 GPU cards. The corresponding total resource amount provided by the idle computing node that has been allocated to the first cluster is: 32 CPU cores, 1024G memory, and 4 GPU cards. Consequently, the demanded resource amount of various types of resources included in the shadow task can be: 20 CPU cores, 400G memory, 10 GPU cards.

In the embodiment, the shadow task can be generated and resources can be allocated to the first cluster based on the shadow task by: determining an i^{th} resource amount to be allocated based on the total demanded resource amount and the total resource amount that has been allocated to the first cluster; generating an i^{th} shadow task based on the i^{th} resource amount to be allocated; performing an (i+1)^{th} resource allocation for the first cluster based on the i^{th} shadow task; where i sequentially takes 1, 2, ..., until the resource amount allocated to the first cluster is greater than or equal to the total demanded resource amount.

The resource amount to be allocated can be a resource amount that needs to be allocated to the first cluster.

The i^{th} resource amount to be allocated can be a demanded resource amount included in the i^{th} shadow task.

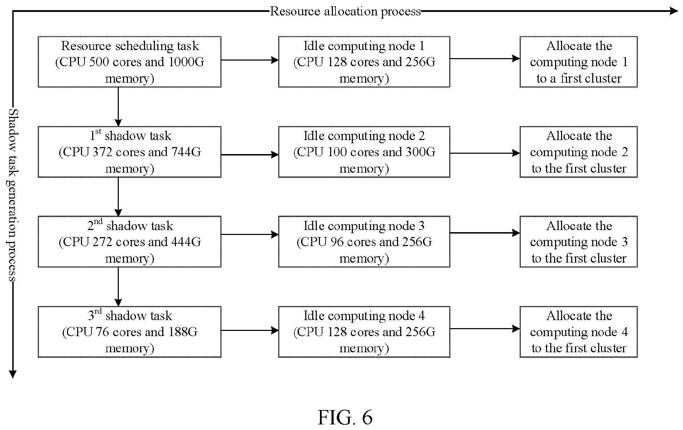

The following, in combination with FIG. 6, explains a process of generating the shadow task and allocating the resources for the first cluster based on the shadow task.

FIG. 6 is a flowchart of resource allocation for the first cluster according to an embodiment of the present application. As shown in FIG. 6, the total demanded resource amount included in the resource scheduling task is: 500 CPU cores and 1000G memory. Initially, there is 1 idle computing node (computing node 1) in the cluster. Assume that the resource amount that the idle computing node 1 can provide is: 128 CPU cores and 256G memory.

When the resource scheduling platform performs a first resource allocation for the first cluster, the resource scheduling platform can allocate the computing node 1 to the first cluster.

Based on the total demanded resource amount and the resource amount provided by the computing node 1, the resource scheduling platform can determine a 1^{st} resource amount to be allocated as 372 CPU cores and 744G memory. Consequently, a demanded resource amount included in a 1^{st} shadow task may be 372 CPU cores and 744G memory.

When a newly added idle computing node (computing node 2) is added to the cluster, the resource scheduling platform can perform a 2^{nd} resource allocation for the first cluster based on the 1^{st} shadow task, that is, allocate the computing node 2 to the first cluster.

The demanded resource amount included in the 1^{st} shadow task may be 372 CPU cores and 744G memory. Assume that a resource amount that the computing node 2 can provide is: 100 CPU cores and 300G memory.

Based on the demanded resource amount included in the 1^{st} shadow task and the resource amount provided by the computing node 2, the resource scheduling platform can determine a 2^{nd} resource amount to be allocated as 272 CPU cores and 444G memory. Consequently, a demanded resource amount included in a 2^{nd} shadow task may be 272 CPU cores and 444G memory.

When a newly added idle computing node (computing node 3) is added to the cluster, the resource scheduling platform can perform a 3^{rd} resource allocation for the first cluster based on the 2^{nd} shadow task, that is, allocate the computing node 3 to the first cluster.

The demanded resource amount included in the 2^{nd} shadow task may be 272 CPU cores and 444G memory. Assume that a resource amount that the computing node 3 can provide is: 96 CPU cores and 256G memory.

Based on the demanded resource amount included in the 2^{nd} shadow task and the resource amount provided by the computing node 3, the resource scheduling platform can determine a 3^{rd} resource amount to be allocated as 76 CPU cores and 188G memory. Consequently, a demanded resource amount included in a 3^{rd} shadow task may be 76 CPU cores and 188G memory.

When a newly added idle computing node (computing node 4) is added to the cluster, the resource scheduling platform can perform a 4^{th} resource allocation for the first cluster based on the 3^{rd} shadow task, that is, allocate the computing node 4 to the first cluster.

The demanded resource amount included in the 3^{rd} shadow task may be 76 CPU cores and 188G memory. Assume that a resource amount that the computing node 4 can provide is: 128 CPU cores and 256G memory. Since the resource amount that the computing node 4 can provide is greater than the demanded resource amount included in the 3^{rd} shadow task, a resource amount to be allocated does not need to be determined after the computing node 4 is allocated to the first cluster.

In the embodiment, in a case that a total resource amount of an (i+1)^{th} idle computing node is greater than or equal to a demanded resource amount included in the i^{th} shadow task, the (i+1)^{th} idle computing node can be allocated to the first cluster, and no more shadow task is generated. In a case that the total resource amount of the (i+1)^{th} idle computing node is less than the demanded resource amount included in the i^{th} shadow task, the (i+1)^{th} idle computing node can be allocated to the first cluster, and an (i+1)^{th} shadow task can be generated to continue allocating resources to the first cluster.

Take FIG. 6 for example. A total resource amount of a 4^{th} idle computing node (128 CPU cores and 256G memory) is greater than the demanded resource amount included in the 3^{rd} shadow task (76 CPU cores and 188G memory). Therefore, the 4^{th} idle computing node can be allocated to the first cluster based on the demanded resource amount included in the 3^{rd} shadow task, and no more shadow task is generated.

Take FIG. 6 for example. A total resource amount of a 3^{rd} idle computing node (96 CPU cores and 256G memory) is less than the demanded resource amount included in the 2^{nd} shadow task (272 CPU cores and 444G memory). Therefore, the 3^{rd} idle computing node may be allocated to the first cluster, and the 3^{rd} shadow task may be generated.

In the embodiment, the resource scheduling platform can allocate the idle computing node to the first cluster based on the service processing request acquired from the first cluster. In a case that the total resource amount of the current idle computing node is less than the total demanded resource amount required for the service processing request, when a newly added idle computing node is added to the resource pool, the resource scheduling platform can continue to allocate the idle computing node to the first cluster. The scheduler in the first cluster can run at least one service corresponding to the above service processing request on the idle computing node. It should be noted that a method in which the scheduler runs the service based the total resource amount that can be provided by the idle computing node and the total resource amount required for running the service corresponding to the service processing request may refer to the related art, which is not repeated here.

S507: Update a state of a second computing node.

The second computing node may be an idle computing node that the resource scheduling platform currently allocates to the first cluster.

In the embodiment, after allocating the idle computing node to the first cluster, the method further includes: determining the second computing node allocated to the first cluster; updating the state of the second computing node from the idle state to the fully occupied state.

It should be noted that for any one idle computing node in the cluster, after the resource scheduling platform allocates the computing node to the first cluster, the scheduler in the first cluster can incorporate the computing node into the first cluster, so that the first cluster can run a service on the computing node, and the computing node is no longer an idle node. Therefore, the resource scheduling platform can update the state of the computing node to the fully occupied state.

In a specific implementation process, the resource scheduling platform can send node information of the idle computing node (for example, the node information may include a name of the computing node, an Internet Protocol (Internet Protocol, IP) address, and a resource amount that can be provided) to the scheduler in the first cluster. After the scheduler in the first cluster receives the node information, the scheduler can incorporate a corresponding computing node into the first cluster based on a scale-out command. After the scheduler incorporates the idle computing node into the first cluster, the scheduler can run the service on the computing node.

S508: Update a state of a third computing node.

The third computing node can be an idle computing node in the first cluster.

In the embodiment, resource usage information of each computing node in the first cluster can also be acquired; and in a case of, based on the resource usage information, determining that no service is running on the third computing node in the first cluster, reclaim the third computing node from the first cluster, and switch the state of the third computing node to an idle state.

It should be understood that for any one computing node in the first cluster, in a case that there is no other service running on the computing node after a current running service on the computing node finishes running, there may be a situation where the computing node is idle. Then the resource scheduling platform may reclaim the computing node.

In a specific implementation process, the resource scheduling platform may periodically monitor whether there is a running service on each computing node in the first cluster. For any one computing node in the first cluster, in a case that the resource scheduling platform continuously detects that a number of times there is no running service on the computing node is greater than or equal to a preset threshold, the resource scheduling platform may reclaim the computing node from the first cluster and update a state of the computing node to the idle state. For example, after the resource scheduling platform determines the idle computing node in the first cluster, the resource scheduling platform can trigger the scheduler in the first cluster to execute a scale-in command, so that the resource scheduling platform may reclaim the computing node from the first cluster.

It should be understood that a resource management platform reclaims any one computing node from the first cluster, allowing the first cluster to be scaled in, that is, the computing node no longer belongs to the first cluster.

For example, assume that the resource scheduling platform has a monitoring cycle of 60 seconds and a preset threshold of 10 times. For any one computing node in the first cluster, the resource scheduling platform can monitor whether there is any running service on the computing node once every 60 seconds. In a case that the resource scheduling platform monitors that there is no running service on the computing node 10 times consecutively, the resource scheduling platform can reclaim the computing node from the first cluster and update the state of the computing node to the idle state.

It should be noted that S508 may be performed after S507, or S508 may be performed before S507, or S508 may be performed simultaneously with S507, which is not limited in the embodiment of the present application.

In the resource scheduling method provided in the embodiment of the present application, the resource scheduling platform can acquire the service processing request, perform parsing processing on the service processing request to obtain a demanded resource amount of each service processing request, determine the total demanded resource amount based on the demanded resource amount of each service processing request, and generate the resource scheduling task based on the total demanded resource amount. In a case that the total resource amount of the current idle computing node in the cluster is less than the total demanded resource amount included in the resource scheduling task, the resource scheduling platform can allocate the resources to the first cluster in batches. This not only improves an overall resource utilization of the cluster but also accelerates a service processing speed of the first cluster, resulting in the higher cluster resource utilization and the faster service processing speed.

The following provides a detailed explanation of a technical solution described in any embodiment of the present application through a specific example.

Assume that the resource scheduling platform acquires 10 service processing requests from the first cluster. A demanded resource amount of each of the 10 service processing requests may be: 50 CPU cores and 100G memory. Then, after the resource scheduling platform performs parsing processing on the 10 service processing requests, it may be determined that the total demanded resource amount of the 10 service processing requests is: 500 CPU cores and 1000G memory.

The entire cluster can include 10 computing nodes. Assume that only the computing node 1 is currently idle, the total resource amount of the computing node 1 is: 300 CPU cores and 624G memory. The resource scheduling platform can first allocate the computing node 1 to the first cluster, and generate a shadow task 1. The demanded resource amount included in the shadow task 1 may be 200 CPU cores and 376G memory. In this case, the scheduler in the first cluster can schedule 6 service processing requests to run on the computing node 1. This not only improves the overall resource utilization of the computing node in the cluster but also accelerates the processing speed of the service processing request in the first cluster.

When a newly added idle computing node is added to the cluster, the resource scheduling platform can continue to allocate resources to the first cluster based on the shadow task 1. Assume that the newly added idle computing node is the computing node 2, and the total resource amount of the computing node 2 is: 300 CPU cores and 500G memory. A total CPU resource amount of the computing node 2 is greater than a CPU resource amount required by the shadow task 1, and a total memory resource amount of the computing node 2 is greater than the CPU resource amount required by the shadow task 1. Therefore, the resource scheduling platform can allocate the computing node 2 to the first cluster without needing to generate a new shadow task.

It should be understood that after allocating the computing node 1 and the computing node 2 to the first cluster, the resource scheduling platform can update states of the computing node 1 and the computing node 2 from the idle state to the occupied state. In addition, when any one computing node in the first cluster finishes running its current service and there is no other service running on the computing node, the resource scheduling platform may reclaim the computing node from the first cluster and update a state of the computing node from the fully occupied state to the idle state.

In the above resource scheduling method, when the total resources in the cluster do not meet requirements of the current service processing request, the resources may be allocated to the first cluster in batches. By using the above method, an overall resource utilization of the cluster can be improved, and a processing speed of the service processing request can be accelerated, resulting in the higher resource utilization and the faster service processing speed in the cluster.

In the embodiment of the present application, the user can also directly submit the service processing request to the resource scheduling platform. After receiving the service processing request submitted by the user, the resource scheduling platform may run the service processing request on a computing node with idle resources in the resource pool. For example, the computing node with idle resources may be an idle computing node, or, the computing node with idle resources may be a computing node in a partially occupied state.

In a possible implementation, after the resource scheduling platform runs the service processing request directly submitted by the user on the idle computing node, in a case that there are remaining resources on the computing node, the resource scheduling platform can update the state of the computing node to the partially occupied state. In a case that there are no remaining resources on the computing node, the resource scheduling platform can update the state of the computing node to the fully occupied state.

In another possible implementation, after the resource scheduling platform runs the service processing request submitted by the user on the computing node in the partially occupied state, in a case that there are remaining resources on the computing node, the resource scheduling platform does not update the state of the computing node. In a case that there are no remaining resources on the computing node, the resource scheduling platform can update the state of the computing node to the fully occupied state.

It should be noted that the resource scheduling platform can continue to run the service processing request directly submitted by any other user on the computing node in the partially occupied state.

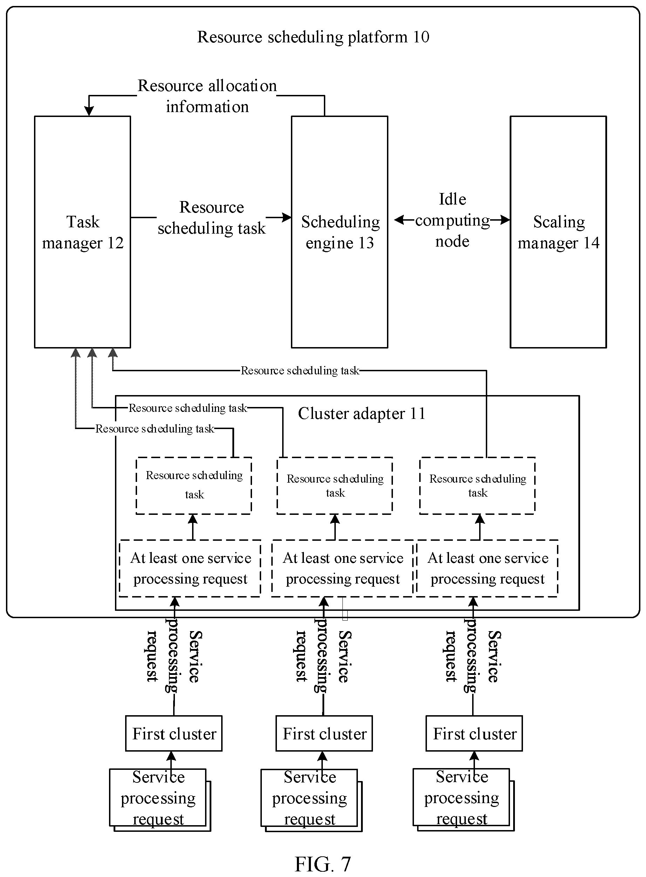

FIG. 7 is a structural diagram of the resource scheduling platform according to an embodiment of the present application. As shown in FIG. 7, a resource scheduling platform 10 includes a cluster adapter 11, a task manager 12, a scheduling engine 13, and a scaling manager 14.

The cluster adapter 11 is configured to acquire at least one service processing request from the first cluster. The service processing request includes a demanded resource amount of various types of resources.

The cluster adapter 11 is further configured to generate a resource scheduling task based on the at least one service processing request. The resource scheduling task includes the total demanded resource amount of various types of resources.

The task manager 12, the scheduling engine 13, and the scaling manager 14 are configured to allocate resources to the first cluster at least once based on the resource scheduling task, until the resource amount allocated to the first cluster is greater than or equal to the total demanded resource amount.

The resource scheduling platform provided in the embodiment can be used to implement the technical solution of any method embodiment described above, with similar implementation principle and technical effect, which will not be repeated here.

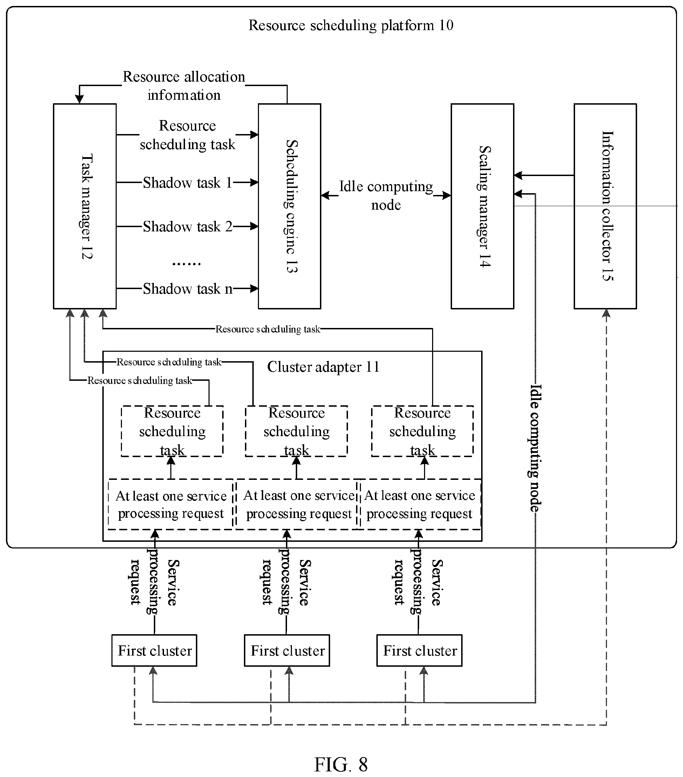

FIG. 8 is a structural diagram of another resource scheduling platform according to an embodiment of the present application. As shown in FIG. 8, the resource scheduling platform 10 also includes an information collector 15.

The task manager 12 is further configured to generate the shadow task when the total resource amount is less than the total demanded resource amount.

The scaling manager 14 is further configured to reclaim a computing node not running a task from the first cluster.

The information collector 15 is configured to acquire resource usage information of each computing node in the first cluster.

In the embodiment, the resource scheduling platform can be a software program or a device.

When the resource scheduling platform is the software program, the resource scheduling platform may be stored in the memory of the computing device and run by the processor of the computing device. The computing device may be a server, computer, mobile phone, or other computing device with a processing capability. When the resource scheduling platform is the software program, the cluster adapter, the task manager, the scheduling engine, the scaling manager, and the information collector may be components within the resource scheduling platform.

When the resource scheduling platform is the device, the resource scheduling platform may be a server, computer, mobile phone, or other computing device with a processing capability. When the resource scheduling platform is the device, the cluster adapter, the task manager, the scheduling engine, the scaling manager, and the information collector may be functional modules within the resource scheduling platform.

In the embodiment of the present application, a quantity of first clusters may be one or more. When the quantity of the first clusters is a plurality, the cluster adapter 11 may acquire a service processing request from each of the first clusters, and generate a resource scheduling task based on the acquired service processing request.

For any one resource scheduling task, the task manager 12, the scheduling engine 13, and the scaling manager 14 may allocate an idle computing node to the first cluster based on the resource scheduling task.

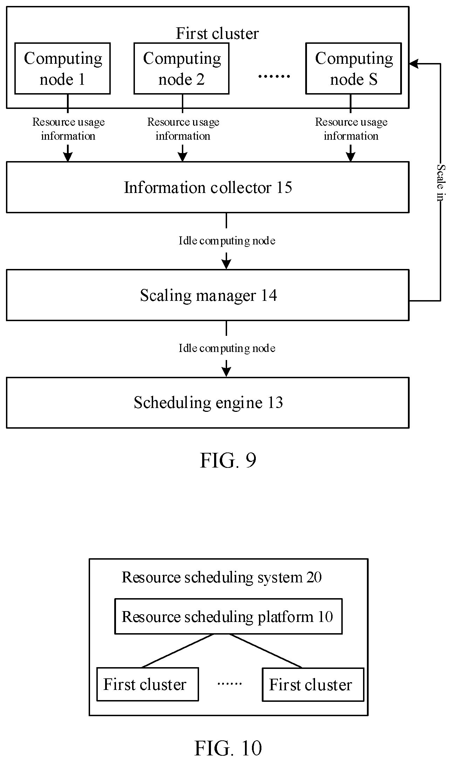

FIG. 9 is a schematic diagram of a computing node reclamation according to an embodiment of the present application. As shown in FIG. 9, the information collector 15 can periodically collect resource usage information of each computing node in the first cluster. For any one computing node in the first cluster, in a case that the information collector 15 continuously monitors that a number of times there is no running service on the computing node is greater than or equal to the preset threshold, the information collector 15 can report the computing node to the scaling manager 14. The scaling processor 14 can trigger the first cluster to scale in, so that the scheduling engine 13 may reclaim the computing node.

The resource scheduling platform provided in the embodiment can be used to implement the technical solution of any method embodiment described above, with similar implementation principle and technical effect, which will not be repeated here.

FIG. 10 is a resource scheduling system according to an embodiment of the present application. As shown in FIG. 10, a resource scheduling system 20 includes the resource scheduling platform 10 described in FIG. 7 or FIG. 8 and at least one first cluster.

The resource scheduling platform 10 is configured to perform methods shown in any of the method embodiment described above, to allocate resources at least once for the first cluster.

The first cluster is configured to schedule and allocate the acquired resources to execute the at least one service processing request.

The resource scheduling system provided in the embodiment can be used to implement the technical solution of any method embodiment described above, with similar implementation principle and technical effect, which will not be repeated here.

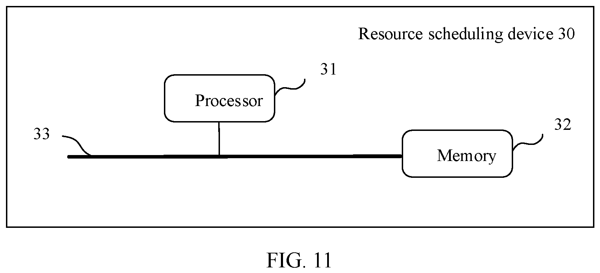

FIG. 11 is a schematic diagram of a hardware structure of a resource scheduling device according to an embodiment of the present application. As shown in FIG. 11, a resource scheduling device 30 includes a processor 31 and a memory 32. The processor 31 and the memory 32 can communicate, for example, the processor 31 and the memory 32 communicate via a communication bus 33. The memory 32 is configured to store a program instruction, and the processor 31 is configured to invoke a program instruction in the memory to perform the resource scheduling method shown in any method embodiment described above.

Optionally, the resource scheduling device 30 may also include a communication interface. The communication interface may include a transmitter and/or a receiver.

Optionally, the processor may be a Central Processing Unit (Central Processing Unit, CPU), or may be another general-purpose processor, a Digital Signal Processor (Digital Signal Processor, DSP), an Application Specific Integrated Circuit (Application Specific Integrated Circuit, ASIC), etc. The general-purpose processor may be a microprocessor or any conventional processor, etc. The steps of the method disclosed in the embodiment of the present application may be directly embodied as being implemented by a hardware processor, or by a combination of hardware and software modules in the processor.

The embodiment of the present application further provides a computing device. The computing device includes a memory and a processor connected to the memory.

The processor is configured to generate a resource scheduling task based on at least one service processing request of the first cluster. The resource scheduling task includes a total demanded resource amount for running a service of the at least one service processing request, and the total demanded resource amount is a sum of demanded resource amounts of each service processing request.

The processor is further configured to acquire a total resource amount of an idle computing node, when the total resource amount of the idle computing node is less than the total demanded resource amount, allocate the idle computing node corresponding to the total resource to the first cluster, and determine a demanded resource amount to be allocated. The demanded resource amount to be allocated is a result obtained by subtracting the total resource amount from the total demanded resource amount.

The processor is further configured to allocate a newly added idle computing node to the first cluster at least once based on the demanded resource amount to be allocated. A resource amount allocated to the first cluster is greater than or equal to the total demanded resource amount.

In a possible implementation, the processor is further configured to, when the total resource amount is less than the total demanded resource amount, generate the shadow task and allocate the newly added idle computing node to the first cluster at least once based on the shadow task.

The processor is further configured to acquire resource usage information of each computing node in the first cluster; and in a case of, based on the resource usage information, determining that no service is running on the third computing node in the first cluster, reclaim the third computing node from the first cluster, and switch the state of the third computing node to the idle state.

The computing device provided in the embodiment can be configured to implement the technical solution of any embodiment described above, with similar implementation principle and technical effect, which will not be repeated here.

The embodiment of the present application further provides a computer-readable storage medium. The computer-readable storage medium stores a computer program. When the computer program is executed by a computer, the resource scheduling method executed by the any embodiment mentioned above, with similar implementation principle and technical effect, which will not be repeated here.

The embodiment of the present application further provides a computer program product including a computer program. When the computer program is executed by a computer, the resource scheduling method executed by the any one embodiment mentioned above is implemented, with similar implementation principle and technical effect, which will not be repeated here.

All or part of the steps of the embodiments described above may be completed by hardware related to a program instruction. The above program can be stored in a readable memory. When the program is executed, steps of the above method embodiments are performed; and the above memory (storage medium) includes: a read-only memory (read-only memory, ROM), a RAM, a flash memory, a drive, a solid-state drive, a magnetic tape, a floppy disk, an optical disc, and any combination thereof.

The embodiments of the present application are described with reference to the method, device (system), and flowcharts and/or block diagrams of a computer program product in the embodiments of the present application. It should be understood that each process and/or block in the flowcharts and/or block diagrams, and a combination of processes and/or blocks in the flowcharts and/or block diagrams, can be implemented by computer program instructions. These computer program instructions may be provided to a processing unit of a general-purpose computer, a dedicated-purpose computer, an embedded processor or any other programmable terminal device to produce a machine, such that the instructions executed by the processing unit of the computer or other programmable terminal device to produce an apparatus for implementing functions specified in one or more processes of the flowcharts and/or one or more blocks of the block diagrams.

These computer program instructions may also be stored in a computer-readable memory that can direct the computer or other programmable terminal device to operate in a particular manner, such that the instructions stored in the computer-readable memory produce a manufactured article including an instruction apparatus. The instruction apparatus implements functions specified in one or more processes of the flowcharts and/or one or more blocks of the block diagrams.

These computer program instructions may also be loaded onto the computer or other programmable terminal device to cause a series of operational steps to be performed on the computer or other programmable terminal device to produce a computer-implemented process, thereby providing steps for implementing functions specified in one or more processes of the flowcharts and/or one or more blocks of the block diagrams.

It is apparent that those skilled in the art may make various modifications and variations of the embodiments of the present application without departing from the scope of the embodiments of the present application.

In the embodiments of the present application, the term "including" and its variations may refer to a non-limiting inclusion; and the term "or" and its variations may refer to "and/or". In the embodiments of the present application, terms such as "first" and "second" are intended to distinguish similar objects, but do not necessarily indicate a specific order or sequence. In the embodiments of the present application, "a plurality" refers to two or more. "and/or" refers to an association relationship between association objects, indicating that three relationships may exist. For example, A and/or B may represent: A exists independently, A and B exist simultaneously, and B exists independently. The character "/" generally indicates that the association objects are in an "or" relationship.

## Claims

1. A resource scheduling method, comprising:
acquiring at least one service processing request from a first cluster, wherein the service processing request comprises a demanded resource amount required for running a service in the service processing request;
based on the at least one service processing request, generating a resource scheduling task, wherein the resource scheduling task comprises a total demanded resource amount, and the total demanded resource amount is a sum of the demanded resource amounts of each service processing request;
acquiring a total resource amount of an idle computing node, when the total resource amount of the idle computing node is less than the total demanded resource amount, allocating the idle computing node corresponding to the total resource amount to the first cluster, and determining a demanded resource amount to be allocated, wherein the demanded resource amount to be allocated is a result obtained by subtracting the total resource amount from the total demanded resource amount; and
allocating a newly added idle computing node to the first cluster at least once based on the demanded resource amount to be allocated, wherein a resource amount allocated to the first cluster is greater than or equal to the total demanded resource amount.

2. The method according to claim 1, wherein allocating the newly added idle computing node to the first cluster at least once based on the demanded resource amount to be allocated, comprises:
generating a shadow task based on the demanded resource amount to be allocated, wherein the shadow task comprises the demanded resource amount to be allocated; and
allocating the newly added idle computing node to the first cluster at least once based on the shadow task.

3. The method according to claim 2, wherein allocating the newly added idle computing node to the first cluster at least once based on the shadow task, comprises:
determining an i^{th} resource amount to be allocated based on the total demanded resource amount and a total resource amount that has been allocated to the first cluster;
generating an i^{th} shadow task based on the i^{th} resource amount to be allocated; and
performing an (i+1)^{th} resource allocation for the first cluster based on the i^{th} shadow task;
wherein the i sequentially takes 1, 2, ..., until the resource amount allocated to the first cluster is greater than or equal to the total demanded resource amount.

4. The method according to any one of claims 1 to 3, wherein generating the resource scheduling task, comprises:
performing parsing processing on the at least one service processing request to obtain the demanded resource amount of each service processing request;
determining the total demanded resource amount based on the demanded resource amount of each service processing request; and
generating the resource scheduling task based on the total demanded resource amount.

5. The method according to any one of claims 1 to 4, wherein after allocating the idle computing node to the first cluster, the method further comprises:
determining a second computing node allocated to the first cluster; and
switching a state of the second computing node from an idle state to an occupied state.

6. The method according to any one of claims 1 to 5, further comprising:
acquiring resource usage information of each computing node in the first cluster; and
if, based on the resource usage information, it is determined that no service is running, reclaiming the third computing node from the first cluster, and switching a state of the third computing node to an idle state.

7. A computing device, comprising a memory and a processor connected to the memory, wherein the processor is configured to generate a resource scheduling task based on at least one service processing request of a first cluster, the resource scheduling task comprises a total demanded resource amount required for running a service of the at least one service processing request, and the total demanded resource amount is a sum of demanded resource amounts of each service processing request;
the processor is further configured to acquire a total resource amount of an idle computing node, when the total resource amount of the idle computing node is less than the total demanded resource amount, allocate the idle computing node corresponding to the total resource amount to the first cluster, and determine a demanded resource amount to be allocated, wherein the demanded resource amount to be allocated is a result obtained by subtracting the total resource amount from the total demanded resource amount; and
the processor is further configured to allocate a newly added idle computing node to the first cluster at least once based on the demanded resource amount to be allocated, wherein a resource amount allocated to the first cluster is greater than or equal to the total demanded resource amount.

8. The computing device according to claim 7, **characterized in that**
the processor is further configured to, when the total resource amount is less than the total demanded resource amount, generate a shadow task, and allocate the newly added idle computing node to the first cluster at least once based on the shadow task; and
the processor is further configured to acquire resource usage information of each computing node in the first cluster; and in a case of, based on the resource usage information, determining that no service is running on a third computing node in the first cluster, reclaim the third computing node from the first cluster, and switch a state of the third computing node to an idle state.

9. A resource scheduling system, comprising the computing device according to claim 7 or 8 and at least one first cluster, wherein
the computing device is configured to perform the method according to any one of claims 1 to 6, to allocate the idle computing node to the first cluster, and to allocate the newly added idle computing node to the first cluster at least once; and
the first cluster is configured to schedule and allocate the acquired idle computing node to execute the at least one service processing request.

10. A resource scheduling device, comprising: a processor, and a memory communicatively connected to the processor;
wherein the memory stores a computer program; and
the processor executes the computer program to implement the method according to any one of claims 1 to 6.
